# EUROPEAN PATENT APPLICATION

(11) **EP 4 685 091 A1**
(43) Date of publication of application: **28.01.2026**
(21) Application number: 23926455.9
(22) Date of filing: 11.12.2023
(51) Int. Cl.: B65G 54/02, G01N 35/04

(54) **CONVEYANCE DEVICE AND CONVEYANCE METHOD**

(30) Priority: 06.03.2023 JP 2023033680
(71) Applicant: HITACHI HIGH-TECH CORPORATION, Tokyo 105-6409 (JP)
(72) Inventor: HOMMA, Shotaro, Tokyo 105-6409 (JP); ONIZAWA, Kuniaki, Tokyo 105-6409 (JP)
(74) Representative: Strehl & Partner mbB
(86) International application number: PCT/JP2023/044277
(87) International publication number: WO 2024/185251

(57) **Abstract**

There are provided a conveyance container 11 provided with a permanent magnet 10, a plurality of coils 21 that generate thrust for conveying the conveyance container 11, a drive unit 50 that applies a voltage to each of the plurality of coils 21, a position detection unit 30a that estimates a position of the conveyance container 11 by estimating a position of the permanent magnet 10 based on current information when a voltage pulse is applied to the coil 21, a sensing unit that detects the position of the conveyance container 11 by a method other than magnetic field detection, and a control unit 40 that controls the drive unit 50 that drives based on position information of the conveyance container 11 estimated by the position detection unit 30a or detected by the sensing unit. Accordingly, a conveyance device and a conveyance method capable of improving conveyance efficiency compared to a configuration in related art can be provided.

## Description

### Technical Field

The present invention relates to a conveyance device and a conveyance method suitable for use in a sample analysis system, such as a sample analysis device that performs analysis of a biological sample (hereinafter, referred to as a "sample") such as blood, plasma, serum, urine, and other body fluids, and a sample preprocessing device that performs a preprocess required for the analysis.

### Background Art

Patent Literature 1 describes that a sample container that contains a sample and provided with a magnetic body, a conveyance plane that conveys the sample container, a plurality of coils disposed on a surface of the conveyance plane opposite to the surface facing the magnetic body, a coil drive unit that applies a voltage to the coil, and a position estimation unit that estimates a position of the sample container based on a current change that occurs when the voltage is applied to the coil by the coil drive unit are provided, and the position estimation unit applies voltage pulses having a phase difference between adjacent coils among the plurality of coils by the coil drive unit, and estimates the position of the conveyance container.

### Citation List

### Patent Literature

PTL 1: JP2021-196193A

### Summary of Invention

### Technical Problem

In a sample analysis system for clinical tests, tests of designated analysis items are executed on samples such as blood, plasma, serum, urine, and other body fluids.

In the sample analysis system, devices having a plurality of functions are connected to each other to automatically execute processing including respective steps. That is, in order to rationalize work of a laboratory, an analysis unit that executes a plurality types of analyses such as biochemistry and immunity, a preprocessing unit that executes a plurality of preprocesses necessary for the analysis, and the like are connected by a conveyance line and used as one sample analysis system.

In recent years, with the advancement of medical care and the aging of patients, the importance of sample analysis has increased. Therefore, in order to improve analysis processing capability of the sample analysis system, there is a demand for high-speed conveyance, mass conveyance, simultaneous conveyance, and conveyance in a plurality of directions of samples.

As such a background art of the technical field, there is PTL 1. However, the sample conveyance device described in PTL 1 does not describe position detection of a sample at a position at which no voltage is applied.

For example, when conveying a sample, the voltage is applied sequentially to the plurality of coils and the coil that generates a magnetic field is switched to convey the conveyance container, but it is conceivable that position detection based on the voltage is not performed at a timing when the coil to which the voltage is applied is switched.

In particular, when the sample is conveyed at a constant speed, the coil is demagnetized at a time when the conveyance container passes directly above the coil, and conveyance is performed by a magnetic field generated by applying a voltage to the adjacent coil.

However, a distance directly above the adjacent coil is outside a range of the position detection using the current change, and there is a concern that a position of the conveyance container may not be detected at a time when the conveyance container passes directly above the coil.

When two paths of samples intersect with each other at a specific coil, conveyance on one path is started first, and conveyance on the other path is started after the sample on the one path is conveyed to a position at which there is no risk of collision at an intersection.

For example, in a case of a configuration in which coils are disposed in a lattice pattern and a sample can be disposed on each lattice point, a timing when a risk of collision between samples at an intersection disappears is a timing when the sample passes through a coil serving as the intersection on a path and reaches directly above a coil of the next lattice point.

However, in a case of detecting the position using a current value of the coil as in PTL 1, the sample can be determined in a position at which there is no risk of collision only when the sample passes a coil where there is no risk of collision and approaches the next coil. However, this means additional waiting time before other samples can begin to move, leaving room for improvement in throughput of the conveyance device.

When the conveyance container being conveyed stops in conveying the sample, voltage application to the coil stops. In this case, it is also not possible to determine that the conveyance container actually stops directly above the coil after the stop processing is executed.

Further, when conveyance is started, the voltage application to the coil is controlled to provide appropriate thrust, assuming that the conveyance container is directly above the coil. Therefore, there is a concern that the appropriate thrust may not be applied when the conveyance container is misaligned from directly above the coil, and thus improvement is desired.

The invention provides a conveyance device and a conveyance method capable of improving conveyance efficiency compared to a configuration in related art.

### Solution to Problem

The present invention includes a plurality of means for solving the above problems, and an example thereof includes: a conveyance container provided with a magnetic body; a plurality of coils configured to generate thrust for conveying the conveyance container; a coil drive unit configured to apply a voltage to each of the plurality of coils; an arithmetic unit configured to estimate a position of the conveyance container by estimating a position of the magnetic body based on current information when a voltage pulse is applied to the coil; a sensing unit configured to detect the position of the conveyance container by a method other than magnetic field detection; and a control unit configured to control the coil drive unit that drives based on position information of the conveyance container estimated by the arithmetic unit or detected by the sensing unit.

### Advantageous Effects of Invention

According to the invention, conveyance efficiency can be improved compared to a configuration in the related art. Problems, configurations, and effects other than those described above will be clarified by description of the following embodiment.

### Brief Description of Drawings

[FIG. 1] FIG. 1 is a plan view illustrating an overall configuration of a sample analysis system provided with a conveyance device of an embodiment.
[FIG. 2] FIG. 2 is a schematic configuration of the conveyance device of the embodiment.
[FIG. 3] FIG. 3 illustrates a control sequence for one magnetic pole (coil) of the conveyance device of the embodiment.
[FIG. 4] FIG. 4 is a diagram illustrating an arrangement of detectors in the conveyance device of the embodiment.
[FIG. 5] FIG. 5 is a diagram illustrating an example of mounting an optical sensor in the conveyance device of the embodiment.
[FIG. 6] FIG. 6 is a diagram illustrating an example of mounting a physical switch in the conveyance device of the embodiment.
[FIG. 7] FIG. 7 is a diagram illustrating an example of implementation of a conveyance plane having detectors and grooves in the conveyance device of the embodiment.
[FIG. 8] FIG. 8 is a diagram illustrating the example of implementation of the conveyance plane having detectors and grooves in the conveyance device of the embodiment.
[FIG. 9] FIG. 9 is a diagram illustrating a case where a position detection method is used together when conveying a plurality of conveyance containers on an intersecting path in the conveyance device of the embodiment.
[FIG. 10] FIG. 10 is a flowchart of stop processing of the conveyance device of the embodiment.

Description of Embodiments

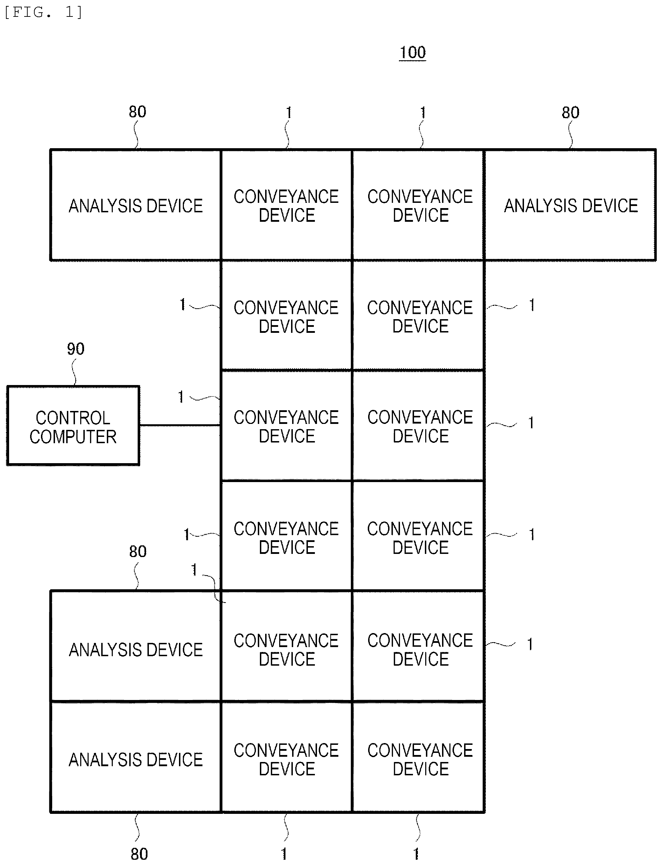

A conveyance device and a conveyance method of the invention will be described with reference to FIGS. 1 to 10.

In the drawings used in the present specification, the same or corresponding components are denoted by the same or similar reference signs, and a repeated description of these components may be omitted.

In the following embodiment, it is needless to mention that components (also including element steps and the like) thereof are not necessarily essential unless otherwise specified or unless clearly considered to be essential in principle.

First, an overall configuration of a sample analysis system including a conveyance device will be described with reference to FIG. 1. FIG. 1 is a plan view illustrating the overall configuration of the sample analysis system including the conveyance device according to the present embodiment.

A sample analysis system 100 according to the present embodiment illustrated in FIG. 1 is a system including an analysis device for automatically analyzing components in a sample such as blood and urine.

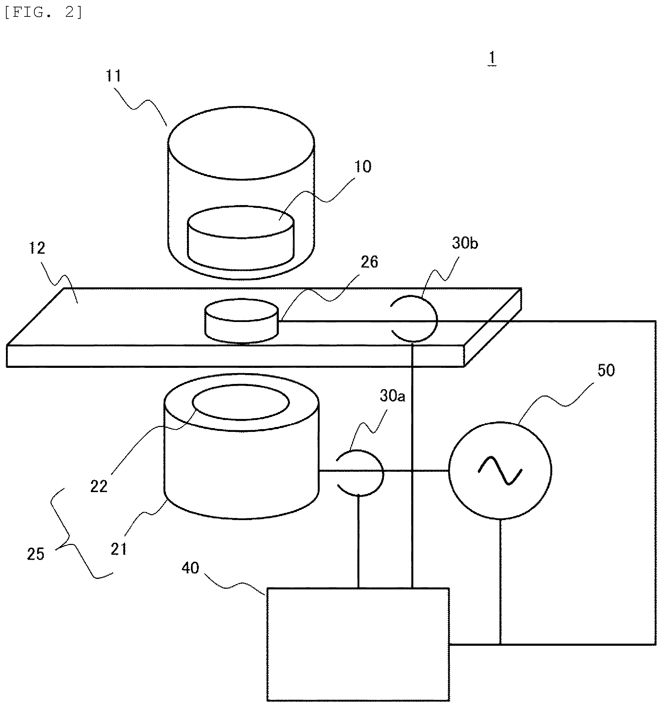

Main components of the sample analysis system 100 are a plurality of conveyance devices 1 (12 devices in FIG. 1) that convey, to a predetermined destination, a conveyance container 11 (see FIG. 2) on which a sample container containing a sample is loaded, or the empty conveyance container 11 with no sample container loaded thereon, a plurality of analysis devices 80 (four devices in FIG. 1), and a control computer 90 that provides integrated management of the sample analysis system 100.

The analysis device 80 is a unit that performs qualitative and quantitative analysis on components in the sample conveyed by the conveyance device **1.** Analysis items in the unit are not particularly limited, and a configuration of a known automatic analysis device for analyzing biochemical items and immune items can be adopted. Further, when a plurality of analysis devices are provided, specifications may be the same as or different from each other, and are not particularly limited.

Each conveyance device 1 is a device that conveys a sample container containing a sample, which is loaded onto the conveyance container 11, to a destination (such as the analysis device 80 or an extraction port) by sliding the sample container along a conveyance path through an interaction between a magnetic pole 25 (see FIG. 2) and a permanent magnet 10 (see FIG. 2) provided on the conveyance container 11. Details thereof will be described with reference to FIG. 2 and subsequent drawings.

The control computer 90 controls operations of the entire system including the conveyance devices 1 and the analysis devices 80, and is implemented by a computer including a display device such as a liquid crystal display, an input device, a storage device, a CPU, a memory, and the like. The operations of the devices are controlled by the control computer 90 based on various programs recorded in the storage device.

Operation control processing executed by the control computer 90 may be integrated into one program, may be divided into a plurality of programs, or may be a combination thereof. A part or all of the programs may be implemented by dedicated hardware or may be modularized.

FIG. 1 illustrates a case where four analysis devices 80 are provided, and the number of analysis devices 80 is not particularly limited and may be one or more. Similarly, the number of conveyance devices 1 is not particularly limited and may be one or more.

The sample analysis system 100 may be provided with various types of sample preprocessing and postprocessing units that perform preprocessing and postprocessing on the sample. A detailed configuration of the sample preprocessing and postprocessing unit is not particularly limited, and a configuration of a known preprocessing device may be adopted.

Next, a configuration of the conveyance device 1 according to the present embodiment will be described with reference to FIG. 2 and subsequent drawings.

First, the conveyance device 1 according to the embodiment of the invention will be described with reference to FIG. 2. FIG. 2 is a configuration diagram of the conveyance device according to the invention.

The conveyance device 1 of the embodiment illustrated in FIG. 2 includes a conveyance plane 12, a position detection unit 30a, the magnetic pole 25, a detector 26, a position detection unit 30b, a drive unit 50, and a control unit 40.

In the conveyance device 1, a sample container containing a sample is mounted on the conveyance container 11. The permanent magnet 10 is provided on a bottom surface of the conveyance container 11.

The conveyance container 11 is a sample holder, a sample rack holding a plurality of sample holders, or the like. The conveyance container 11 generally holds one sample container containing a sample. The sample container is conveyed to a desired position as the permanent magnet 10 moves.

The permanent magnet 10 does not have to be provided on the bottom surface of the conveyance container 11, but it is preferable that the permanent magnet 10 is provided on the bottom surface thereof from the viewpoint of efficiently exerting a conveyance force in a conveyance method of the present invention.

The permanent magnet 10 is disposed in the conveyance container. As the permanent magnet 10, for example, the permanent magnet 10 such as neodymium or ferrite is used. In the embodiment, the permanent magnet 10 is used, but other magnets or a soft magnetic body may be used instead of the permanent magnet 10. Instead of the permanent magnet 10, a combination of the permanent magnet 10 and a soft magnetic body may be used.

Here, the "magnetic body" in the invention means the permanent magnet 10, other magnets, a soft magnetic body, or a combination of the permanent magnet 10 and a soft magnetic body. In the embodiment, the permanent magnet 10 will be described as a representative.

The conveyance container 11 slides on the conveyance plane 12. Therefore, a plurality of magnetic poles 25 each including a columnar core 22 made of a magnetic body and a coil 21 which is a winding wound around an outer periphery of the core 22 are disposed below the conveyance plane 12.

The magnetic pole 25 and the permanent magnet 10 are disposed to face each other with the conveyance plane 12 therebetween. The permanent magnet 10 relatively moves above the magnetic pole 25. That is, the permanent magnet 10 moves above the magnetic pole 25 with the conveyance plane 12 therebetween.

The drive unit 50 is connected one-to-one to the coils 21 that form the respective magnetic poles 25, and a predetermined current can be passed through the coils 21 by applying a predetermined voltage to the magnetic poles 25 using the drive unit 50.

At this time, the magnetic pole 25 is excited to function as an electromagnet, and attracts the permanent magnet 10 provided on the bottom surface of the conveyance container 11 on the conveyance plane 12 by the generated electromagnetic force. By repeating this procedure for all the magnetic poles 25 forming a conveyance path to a target position, the sample container mounted on the conveyance container 11 can be conveyed to a destination point on the conveyance plane 12. The drive unit 50 is suitably an execution subject of a conveyance step of conveying the conveyance container 11 by applying a voltage to the target coil 21 among the plurality of coils 21 that generate thrust for conveying the conveyance container 11.

Here, in order to efficiently apply the electromagnetic force to the permanent magnet 10 and to move the permanent magnet 10 in an intended direction, relative position information between the permanent magnet 10 and the magnetic pole 25 is required.

For example, assume that the permanent magnet 10 is located above (directly above) one of the two magnetic poles 25. Even when a voltage is applied to the magnetic pole 25 (coil 21) directly below the permanent magnet 10, a force (thrust) in a conveyance direction is not generated in the permanent magnet 10. On the other hand, when a voltage is applied to the magnetic pole 25 (coil 21) without the permanent magnet 10 above (directly above), a force is generated in the permanent magnet 10 that attracts the magnetic pole 25, and the force (thrust) in the conveyance direction is generated.

That is, by applying a voltage to the desired magnetic pole 25 (coil 21), a force can be efficiently generated in the conveyance direction in the permanent magnet 10. By selecting the magnetic pole 25 (coil 21) to which the voltage is to be applied, a direction of the force in the conveyance direction can be controlled.

Therefore, in the present embodiment, the position detection unit 30a is provided to detect a position of the conveyance container 11 including the permanent magnet 10 on the conveyance plane 12 by a magnetic field change.

The position detection unit 30a detects the position of the conveyance container 11 including the permanent magnet 10 on the conveyance plane 12. A pulse voltage is applied to the magnetic pole 25 (coil 21), and a current amplitude is acquired after a certain time has elapsed. The current amplitude changes depending on a distance between the magnetic pole 25 (coil 21) and the permanent magnet 10.

Specifically, as the distance between the magnetic pole 25 (coil 21) and the permanent magnet 10 decreases, inductance of the magnetic pole 25 (coil 21) decreases. The smaller the inductance, the faster the current rises and the larger the amplitude. When the inductance is large, the current rises slower and the amplitude decreases.

That is, the position detection unit 30a estimates the position of the permanent magnet 10, that is, the position of the conveyance container 11 by estimating a distance to the permanent magnet 10 with respect to the magnetic pole 25 (coil 21) by detecting a current change when the voltage pulse is applied to the magnetic pole 25 (coil 21). The position detection unit 30a is suitably an execution subject of an arithmetic step of estimating the position of the conveyance container 11 by estimating the position of the permanent magnet 10 based on current information when the voltage pulse is applied to the coil 21.

The voltage to the magnetic pole 25 (coil 21) necessary for the position detection unit 30a to detect the position is assumed to be a drive voltage for conveying the conveyance container 11, but is not limited thereto and may be a voltage dedicated to position detection.

The position detection of the conveyance container 11 by the position detection unit 30a is performed only while the voltage is applied to the magnetic pole 25 (coil 21).

There is an upper limit to a distance at which the position detection unit 30a can detect the position of the conveyance container 11. Therefore, after switching the magnetic pole 25 (coil 21) to which the voltage is applied, a section appears where positional information of the conveyance container 11 cannot be acquired.

Therefore, the conveyance device 1 of the present embodiment acquires absolute position information of the conveyance container 11 using the position detection unit 30b for the section where the position information cannot be acquired by the position detection unit 30a.

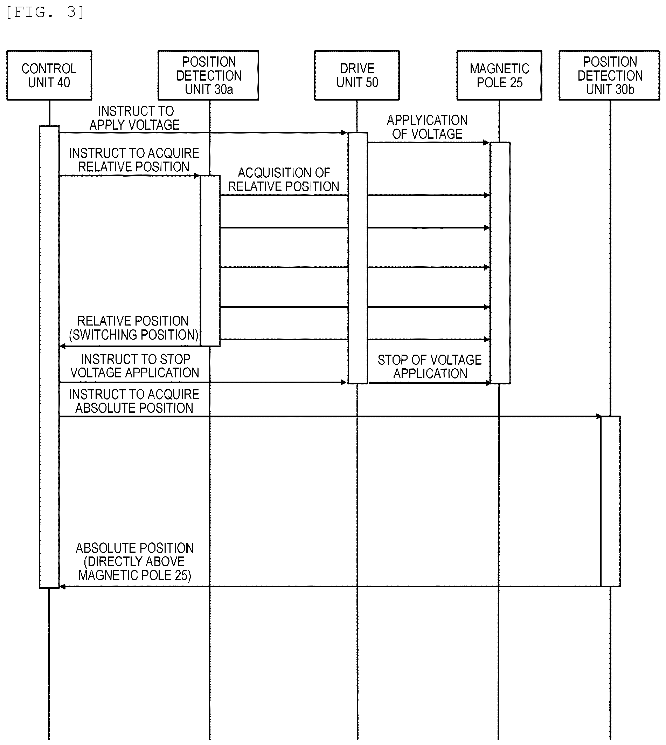

FIG. 3 is an example of a control sequence for one magnetic pole 25 (coil 21) of the conveyance device of the embodiment.

The control unit 40 is a part that controls the drive unit 50 and the position detection units 30a and 30b, and is formed as, for example, a part of the above-described control computer 90, but may be independent.

In the present embodiment, the control unit 40 instructs, to apply a voltage, the drive unit 50 that drives based on the position information of the conveyance container 11 estimated by the position detection unit 30a or detected by the detector 26 to be described later and the position detection unit 30b. The drive unit 50 applies a voltage to the magnetic pole 25 (coil 21) based on the instruction from the control unit 40, thereby generating thrust for the conveyance container 11. The control unit 40 is suitably an execution subject of a control step of controlling the coil 21 in the conveyance step based on the position information of the conveyance container 11 detected in a sensing step or estimated in the arithmetic step.

It is desirable that the control unit 40 estimates the position of the conveyance container 11 based on the position information estimated by the position detection unit 30a when stopping a conveyance operation of the conveyance container 11, and determines whether a stopping operation is normally performed by detecting a position of the sensing unit corresponding to the coil 21 at which the conveyance container 11 stops. Details thereof will be described later.

The position detection unit 30a acquires relative position information of the conveyance container 11 acquired based on a current value of the magnetic pole 25 (coil 21). The control unit 40 switches the magnetic pole 25 (coil 21) to which the voltage is applied at an appropriate timing based on the relative position information from the position detection unit 30a. After stopping the voltage application to the magnetic pole 25 (coil 21) based on the position information from the position detection unit 30a, the control unit 40 starts the position detection of the conveyance container 11 using the corresponding detector 26 directly above the corresponding magnetic pole 25 (coil 21). The position detection unit 30b determines the absolute position information of the conveyance container 11 when the conveyance container 11 is located directly above the detector 26.

In the conveyance device 1 of the present embodiment, the sensing unit that detects the position of the conveyance container 11 by a method other than magnetic field detection (suitably, an execution subject of the sensing step of detecting the position of the conveyance container 11 by a method other than the magnetic field detection) includes the detector 26 using a detection method other than the magnetic field and the position detection unit 30b that detects the position of the conveyance container 11 on the conveyance plane 12 using the detector 26.

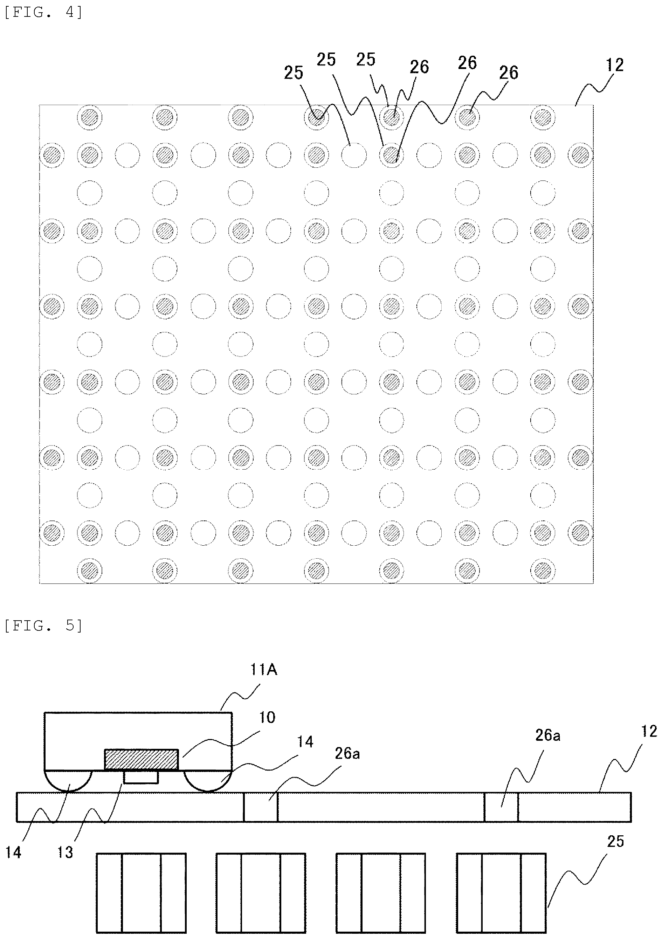

Next, an arrangement position of the detectors 26 in the conveyance device 1 of the embodiment will be described with reference to FIG. 4. FIG. 4 is a view of the conveyance device 1 as viewed from above the conveyance plane 12.

As illustrated in FIG. 4, when the magnetic poles 25 (coils 21) are disposed in a lattice pattern and the detectors 26 are disposed directly above the magnetic poles 25 (coils 21) disposed at positions corresponding to intersections of the magnetic poles 25 (coils 21) and end portions of one conveyance device 1, the magnetic poles 25 (coils 21) are disposed in a rectangular shape. However, the arrangement position of the detectors 26 is applied regardless of the arrangement shape and the number of the magnetic poles 25 (coils 21), and it is desirable that the detector 26 is disposed directly above the coil 21 disposed at the intersecting point on the conveyance path and the end portion of the conveyance device.

By providing the detector 26 at an intersection portion of the magnetic poles 25 disposed in a lattice pattern, a decrease in conveyance efficiency when an intersection of the conveyance containers 11 occurs can be avoided. By also providing the detector 26 at the end portion of the conveyance device 1, in a case where the plurality of conveyance devices 1 are disposed side by side as illustrated in FIG. 1, when conveying to the adjacent conveyance device 1, whether the conveyance container 11 is conveyed to the adjacent conveyance device 1 can be quickly detected, and thus whether conveyance by the adjacent conveyance device 1 can be promptly started can be detected, thereby further improving the conveyance efficiency.

Next, an application example of the detector 26 in the conveyance device 1 of the embodiment will be described with reference to FIG. 5.

An example of the detector 26 used in the conveyance device 1 is an optical sensor 26a. The optical sensor 26a is, for example, a reflective sensor, and is disposed on the conveyance plane 12 such that a light emitting unit and a light receiving unit are exposed on a conveyance container 11A side.

The optical sensor 26a starts detection when detection by the position detection unit 30a is completed and a detection instruction to the position detection unit 30b is issued from the control unit 40. Specifically, when emission of light from the light emitting unit is started and light reflected by a bottom surface of the conveyance container 11A when the conveyance container 11A arrives directly above the light is detected by the light receiving unit, it can be assumed that an object is present within a certain distance from the light receiving unit, and a detection signal can be output to the position detection unit 30b, indicating that the conveyance container 11A is detected.

As a method for detecting the conveyance container 11A directly above the magnetic pole 25 (coil 21), for example, a protrusion 13 is provided on the bottom surface of the conveyance container 11A in a state where the bottom surface of the conveyance container 11A is floated so as not to contact the conveyance plane 12. As a method for floating the bottom surface of the conveyance container 11A such that the protrusion 13 does not come into contact with the conveyance plane 12, for example, a rotating body 14 such as a ball or wheels may be provided on the bottom surface of the conveyance container 11A.

It is desirable that a detection range of the optical sensor 26a is effective up to the protrusion 13 of the conveyance container 11A, and the bottom surface of the conveyance container 11A other than the protrusion 13 is outside the detection range.

Further, it is desirable to dispose the protrusion 13 at a center of the conveyance container 11A such that the conveyance container 11A is detected only when the conveyance container 11A is disposed directly above the magnetic pole 25 (coil 21).

In addition, accuracy of the position detection can be adjusted by changing a width of the protrusion 13.

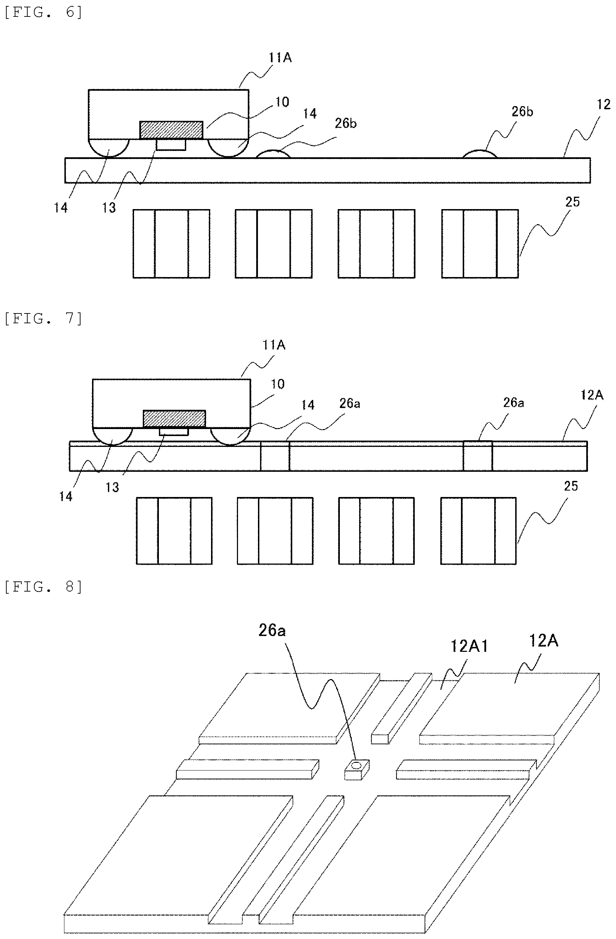

Next, another application example of the detector 26 in the conveyance device 1 of the embodiment will be described with reference to FIG. 6.

Another example of the detector 26 used in the conveyance device 1 is a physical switch 26b. The physical switch 26b is a push-button type switch, and is disposed on the conveyance plane 12 to be exposed to the conveyance container 11A side.

When the physical switch 26b is pressed, the position detection unit 30b is updated assuming that the conveyance container 11A is detected. For example, the physical switch 26b is configured to indicate to the position detection unit 30b that the conveyance container 11A is being detected only while the physical switch 26b is being pressed.

As a method for detecting the conveyance container 11A directly above the magnetic pole 25 (coil 21), it is desirable to provide, for example, the protrusion 13 on the bottom surface of the conveyance container 11A in a state where the bottom surface of the conveyance container 11A is floated so as not to contact the conveyance plane 12. As a method for floating the bottom surface of the conveyance container 11A, it is preferable to provide the rotating body 14 such as a ball or wheels on the bottom surface of the conveyance container 11A.

When the physical switch 26b is pressed by coming into contact with the protrusion 13, by disposing the protrusion 13 at the center of the conveyance container 11A, the conveyance container 11A can be detected only when the conveyance container 11A is located directly above the magnetic pole 25 (coil 21).

The accuracy of the position detection can be adjusted by changing a width of the protrusion 13.

Next, a method for correcting the detected position in the conveyance device 1 of the embodiment will be described with reference to FIGS. 7 and 8.

As illustrated in FIGS. 7 and 8, a case is considered in which a conveyance plane 12A has a groove 12A1, a part of which is lower than the other position, at a position at which the conveyance container 11A can be conveyed in the conveyance device 1.

As described above, the conveyance container 11A has the protrusion 13 and the rotating body 14 on the bottom surface thereof, and in the conveyance container 11A having a structure in which the conveyance plane 12A and the bottom surface (the protrusion 13) do not come into contact with each other, the rotating body 14 contacts the groove 12A1 which is lower than the other position, so that it is desirable to dispose the detector 26 between the groove 12A1 and the groove 12A1.

In this way, by positioning the rotating body 14 of the conveyance container 11A at a different height from the detector 26, for example, the detector 26 can be prevented from reacting at a portion other than the protrusion 13 of the conveyance container 11A. A deviation from the conveyance, such as the conveyance container 11A shifting in an unintended direction with respect to the conveyance direction, that is, to the side can be prevented.

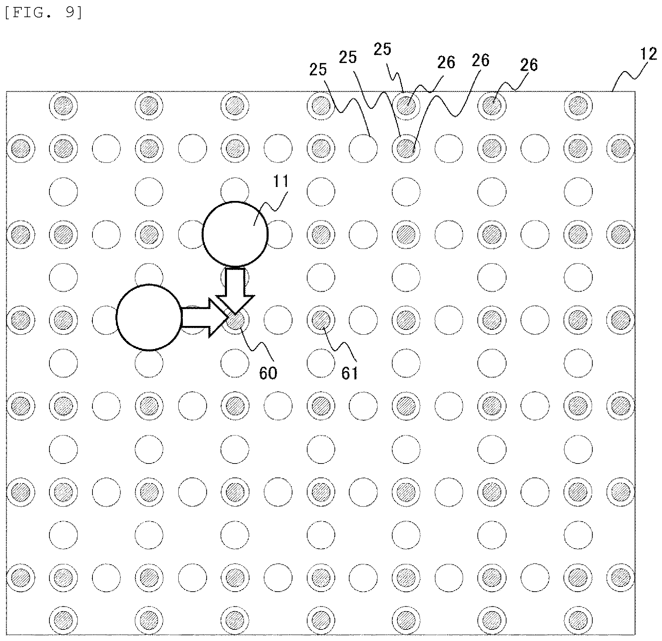

Next, conveyance control of a plurality of conveyance containers 11 using a detection method together in the conveyance device 1 of the embodiment will be described with reference to FIG. 9.

A case is considered where in the conveyance device 1, conveyance is performed such that paths for two conveyance containers 11 intersect at an intersection 60.

In this case, in order to reliably avoid the collision, it is desirable to start conveying one of the conveyance containers 11, and start conveying the other one of the conveyance containers 11 when the one of the conveyance containers 11 passes the intersecting point and reaches a position at which there is no risk of contact with the other one of the conveyance containers 11. The position at which there is no risk of contact between the conveyance container 11 is a point 61 at which the next detector 26 is located, as viewed from the intersection 60 of the conveyance containers 11, and which can be a candidate for the next intersection.

Therefore, it is desirable that the control unit 40 estimates the position of the conveyance container 11 based on the position information estimated by the position detection unit 30a up to a certain distance from the coil 21, and when intersection of the conveyance containers 11 occurs, the control unit 40 uses, based on the position information estimated by the position detection unit 30a and the position information using the sensing unit, information on the detection at the position at which the collision between the conveyance containers 11 is avoided, that is, the detection of the conveyance container 11 by the detector 26 positioned at the point 61.

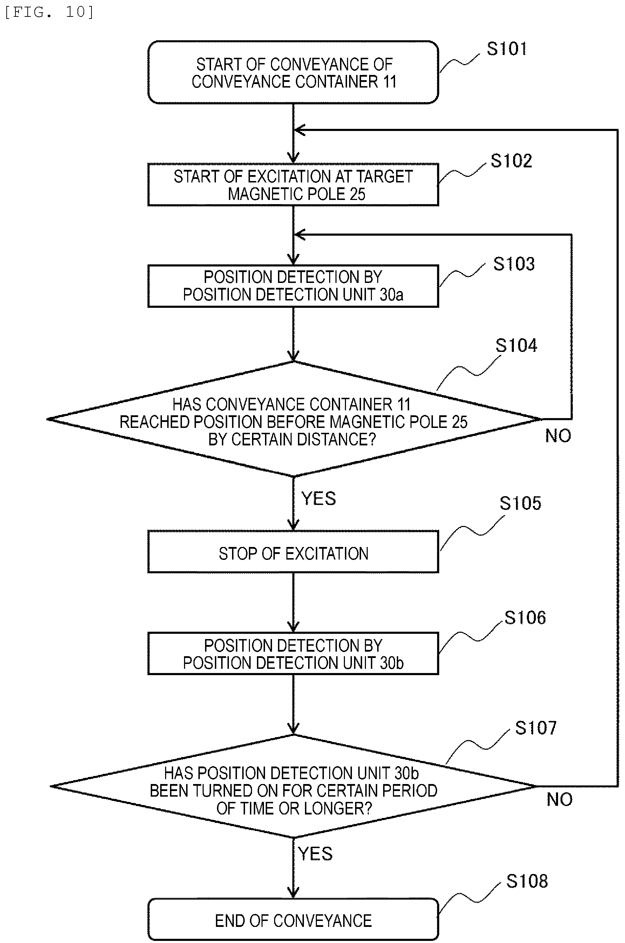

Next, stop control of the conveyance container 11 using the detection method together in the conveyance device 1 of the embodiment will be described with reference to FIG. 10.

The conveyance device 1 starts conveyance of the conveyance container 11 (S101).

First, the control unit 40 controls the drive unit 50 to sequentially apply a voltage to the magnetic pole 25 (coil 21) serving as a target stop position and the magnetic poles 25 (coils 21) forming a conveyance path to the target stop position to start excitation (S102).

The position detection unit 30a detects the position of the conveyance container 11 based on a current change (S103). The control unit 40 determines, based on the result of the position detection unit 30a in step S103, whether the conveyance container 11 is present at a position a certain distance away from the magnetic pole 25 (coil 21) at the target stop position (S104).

When it is determined that the conveyance container 11 is not at a certain distance from the magnetic pole 25 (coil 21) at the target stop position, the process returns to step S103, and the control unit 40 continues excitation of the magnetic pole 25 (coil 21) and position detection by the position detection unit 30a.

On the other hand, when it is determined in step S104 that the conveyance container 11 is at a certain distance, the control unit 40 stops the excitation of the magnetic pole 25 (coil 21) (S105). At the same time, since the position detection by the position detection unit 30a is premised on application of a voltage to the magnetic pole 25 (coil 21), the position detection by the position detection unit 30a also stops at the point of time in S105.

Next, the control unit 40 starts the position detection of the conveyance container 11 by the position detection unit 30b (S106). The control unit 40 determines, based on the result of the position detection unit 30b in step S106, whether the conveyance container 11 is present directly above the magnetic pole 25 (coil 21) serving as the target stop position (S107).

When the conveyance container 11 continues to be detected by the position detection unit 30b for a certain period of time or longer, the control unit 40 determines that the conveyance container 11 reaches the target stop position, and ends the conveyance (S108).

On the other hand, when the position detection unit 30b does not detect the position of the conveyance container 11 for a certain period of time, the control unit 40 determines that the conveyance container 11 does not reach directly above the target stop position, returns the process to step S102, and continues the conveyance until the conveyance container 11 stops at the target position.

Next, effects of the embodiment will be described.

The conveyance device of the present embodiment described above includes: a conveyance container 11 provided with a permanent magnet 10, a plurality of coils 21 that generate thrust for conveying the conveyance container 11, a drive unit 50 that applies a voltage to each of the plurality of coils 21, a position detection unit 30a that estimates a position of the conveyance container 11 by estimating a position of the permanent magnet 10 based on current information when a voltage pulse is applied to the coil 21, a sensing unit that detects the position of the conveyance container 11 by a method other than magnetic field detection, and a control unit 40 that controls the drive unit 50 that drives based on the position information of the conveyance container 11 estimated by the position detection unit 30a or detected by the sensing unit.

Accordingly, since the position of the conveyance container 11 can be detected without being affected by the drive coil, the position can also be detected at the time when the conveyance container 11 passes directly above the coil 21. Therefore, the stop position for collision avoidance can also be confirmed more quickly than in the related art. Therefore, the collision between the conveyance containers 11 can be avoided with less time loss than in the related art, and more conveyance time for the conveyance containers 11 can be secured compared to a configuration in related art, thereby improving the conveyance efficiency compared to that in the related art.

Since the optical sensor 26a or the physical switch 26b is provided as the sensing unit, the conveyance container 11 directly above the magnetic pole 25 can be reliably detected.

Further, by positioning the sensing unit directly above the coil 21 disposed at the intersecting point on the conveyance path and at the end portion of the conveyance device, the detector 26 can be disposed directly above, at a point where detection is important to avoid the collision when an intersection occurs.

The control unit 40 estimates the position of the conveyance container 11 using the position information estimated by the position detection unit 30a up to a certain distance from the coil 21, and when the intersection of the conveyance containers 11 occurs, the control unit 40 detects, based on the position information estimated by the position detection unit 30a and the position information using the sensing unit, the position at which the collision between the conveyance containers 11 is avoided, thereby reliably avoiding the collision without reducing the conveyance efficiency.

Further, the control unit 40 estimates the position of the conveyance container 11 based on the position information estimated by the position detection unit 30a when stopping a conveyance operation of the conveyance container 11, and determines whether a stopping operation is normally performed by detecting the position of the sensor corresponding to the coil 21 at which the conveyance container 11 stops, thereby enabling the position of the conveyance container 11 to be reliably detected during the conveyance without disposing more sensing units than necessary.

Since the conveyance path is formed by the groove 12A1 formed on the conveyance plane 12A on which the conveyance container 11 slides, the conveyance direction is easily limited, and a deviation from the conveyance path can be easily avoided.

Further, since the conveyance container 11A has, on the bottom surface thereof, the rotating body 14 sliding in the groove 12A1 and the protrusion 13 to which the sensor reacts, the detection by the sensing unit can be ensured, and the electromagnetic force required for conveyance can be reduced.

### <Others>

The invention is not limited to the embodiments described above, and various modifications and applications are possible. The embodiments described above are described in detail for easy understanding of the invention, and are not necessarily limited to those having all the configurations described above.

### Reference Signs List

1 conveyance device
10 permanent magnet (magnetic body)
11, 11A conveyance container
12, 12A conveyance plane
12A1 groove
13 protrusion
14 rotating body
21 coil
22 core
25 magnetic pole
26 detector (sensing unit)
26a optical sensor (sensing unit)
26b physical switch (sensing unit, mechanical sensor)
30a position detection unit using magnetic field
30b position detection unit (sensing unit) using detection method other than magnetic field
40 control unit
50 drive unit (coil drive unit)
60 intersection
61 point at which there is no risk of contact between conveyance containers
80 analysis device
90 control computer 100 sample analysis system

## Claims

1. A conveyance device comprising:
a conveyance container provided with a magnetic body;
a plurality of coils configured to generate thrust for conveying the conveyance container;
a coil drive unit configured to apply a voltage to each of the plurality of coils;
an arithmetic unit configured to estimate a position of the conveyance container by estimating a position of the magnetic body based on current information when a voltage pulse is applied to the coil;
a sensing unit configured to detect the position of the conveyance container by a method other than magnetic field detection; and
a control unit configured to control the coil drive unit that drives based on position information of the conveyance container estimated by the arithmetic unit or detected by the sensing unit.

2. The conveyance device according to claim **1,** wherein
the conveyance device includes an optical sensor or a mechanical sensor as the sensing unit.

3. The conveyance device according to claim **1,** wherein
a sensor of the sensing unit is disposed directly above the coil disposed at an intersecting point on a conveyance path.

4. The conveyance device according to claim **1,** wherein
a sensor of the sensing unit is disposed directly above the coil disposed at an end portion of the conveyance device.

5. The conveyance device according to claim 3 or **4,** wherein the control unit
estimates the position of the conveyance container up to a certain distance from the coil based on position information estimated by the arithmetic unit, and
detects, when intersection of the conveyance containers occurs, a position at which collision between the conveyance containers is avoided based on the position information estimated by the arithmetic unit and position information obtained by using the sensing unit.

6. The conveyance device according to claim 3 or 4, wherein
the control unit estimates the position of the conveyance container based on position information estimated by the arithmetic unit when stopping a conveyance operation of the conveyance container, and determines whether a stopping operation is normally performed by detecting a position of the sensing unit corresponding to the coil at which the conveyance container stops.

7. The conveyance device according to claim **3,** wherein
the conveyance path is composed of a groove formed on a conveyance plane on which the conveyance container slides.

8. The conveyance device according to claim **7,** wherein
the conveyance container includes, on a bottom surface thereof, a rotating body that slides in the groove and a protrusion to which the sensor reacts.

9. A conveyance method of a conveyance container including a magnetic body, the conveyance method comprising:
a conveyance step of conveying the conveyance container by applying a voltage to a target coil among a plurality of coils that generate thrust for conveying the conveyance container;
an arithmetic step of estimating a position of the conveyance container by estimating a position of the magnetic body based on current information when a voltage pulse is applied to the coil;
a sensing step of detecting the position of the conveyance container by a method other than magnetic field detection; and
a control step of controlling the coil in the conveyance step based on position information of the conveyance container estimated in the arithmetic step or detected in the sensing step.
